# EUROPEAN PATENT SPECIFICATION

(11) **EP 3 074 661 B1**
(45) Date of publication and mention of the grant of the patent: **22.05.2019**
(21) Application number: 14810006.8
(22) Date of filing: 28.11.2014
(51) Int. Cl.: F16H 7/08, B62M 9/16

(54) **CHAIN TENSIONER**
KETTENSPANNER
TENDEUR DE CHAÎNE

(30) Priority: 29.11.2013 NL 1040519
(43) Date of publication of application: 05.10.2016
(73) Proprietor: IDBIKE B.V., 5133 NE Riel (NL)
(72) Inventor: ROOVERS, Gijsbertus, Cornelis, Fransiscus, NL-5014 AS Tilburg (NL)
(74) Representative: Griebling, Onno
(86) International application number: PCT/NL2014/000045
(87) International publication number: WO 2015/080570

(56) References cited:
- CN-U- 202 320 708
- DE-U1- 9 420 206
- FR-A- 994 334
- JP-A- 2007 276 603
- JP-U- 3 076 990
- NL-C1- 1 031 405
- US-A- 5 632 699

## Description

### FIELD OF THE INVENTION

The invention relates to a chain tensioner, particularly a chain tensioner for bicycles.

### BACKGROUND OF THE INVENTION

Bicycles are commonly known, and a general description thereof can remain short. A bicycle comprises a frame with a rear wheel mounted rotatably in the frame and a crank set mounted rotatably in the frame, comprising a bottom bracket axle and two pedals attached to the ends of the bottom bracket axle. The cyclist kicks the pedals to drive the bicycle. In order to transfer the rotating movement of the crank set to a rotating movement of the rear wheel, the crank set is provided with at least one chain wheel, the rear wheel is provided with at least one chain wheel, and these chain wheels are coupled to each other by a chain.

A common problem for chains is that they can suffer from wear and tear. An important form of wear is elongation, in other words strain, caused by the wear of the bearing pins and bushes occurring in the chain. During use, the upper part of the chain will be pulled tight, and all possible strain ends up in the loosely hanging lower part of the chain. If the chain wheels on the axles are not fabricated accurately and consequently have eccentric deviation, an extra high pulling force can result in the chain when using these parts, which only worsens the wear and thus the strain. As such, a large strain does not influence the drive. However, as the strain increases, the chance increases that the chain runs off of the chain wheels.

Depending on design, the drive system of a bicycle can further be provided with several components, such as for instance back pedal brake, free wheel, derailleur and hub gear systems. Therefore, mainly two different variations have developed for the design shape of a bicycle: bicycles with closed drive in a chain guard and bicycles having a drive without chain guard and with a derailleur.

Particularly in the case of bicycles with a chain guard, noise is generated because the loose chain half rattles against the chain guard. Especially if the drive is mounted in a tight chain guard, a large sagging is not acceptable.

Often, the derailleur drive uses a fixed position of the rear wheel; this is possible, because a derailleur has a built-in chain tensioner that accommodates the wear of the chain, so that the strain of the chain has no disadvantageous influence on the operation of the system. This fixed position can be realised by providing the frame with a vertical drop out, or by providing the frame with round holes for the purpose of a pulling axle.

Traditionally, the bicycle with closed drive and chain guard is equipped with a displaceable rear wheel, of which the axle is mounted in approximately horizontal, open grooves in the frame. The elongation of the chain is then compensated by displacing the rear wheel backwards until the chain has again the correct setting. If eventually, after prolonged use, the chain has too much elongation by wear and adjusting the rear wheel is no longer possible, one needs to remove some links or mount a new chain.

In order to solve or at least reduce the said problems, various kinds of resilient chain tensioners have been developed for use in chain guards. In any case, these have the purpose of reducing the risk of a chain running off, to prevent rattling of the chain against the chain guard, and to prevent large pulling forces caused by eccentric chain wheels, especially when a chain force sensor is used for controlling a pedal force supporting electromotor. Existing designs have however not been a great success in practice. In the first place, the capacity for accommodating length variations has appeared to be limited. A relatively small amount of strain could be accommodated, but in the case of larger strain the above-mentioned problems nevertheless occurred, and it was still necessary to take the above-mentioned measures. Furthermore, the existing designs introduced new problems in turn, such as insufficient mechanical strength, production of noise, internal friction.

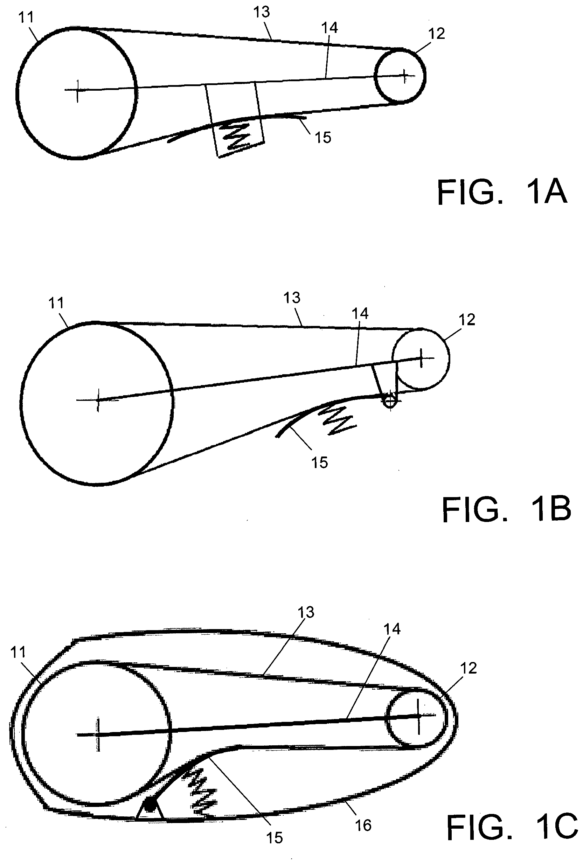

Some of the existing designs are based on pressing against the chain at a single point. The pressing is usually done with a tensioned gliding shoe, or with a pressing roler, in which case the displacement of the gliding shoe or pressing roler is linear or via a hinge movement. The tensioning mechanism may be attached to the lying rear fork, at a position approximately halfway between the bottom bracket axle and the rear wheel (figure 1A). The tensioning mechanism may be attached to the frame in the proximity of the rear axle, in which case the gliding shoe is hinged (figure 1B). It is also possible that the tensioning mechanism is placed closer to the pedals. It is also known to attach the tensioning mechanism to the chain guard itself (figure 1C). A disadvantage is then that chain noise is transferred to the chain guard via the tensioner, so that the chain guard operates as a sound box. Further, the chain guard is a relatively weak part that can not resist the forces occurring when a back pedal brake is used, because these chain forces are exerted on the tensioner and thus also on the plastic chain guard. All these systems have in common that their capacity is insufficient for accommodating the chain wear of the bicycle during the life cycle of the bicycle. Indicated in the figures are: 11 a chain wheel of a crank set, 12 a chain wheel of a rear axle, 13 a chain, 14 a frame, 15 a gliding shoe, 16 a chain guard.

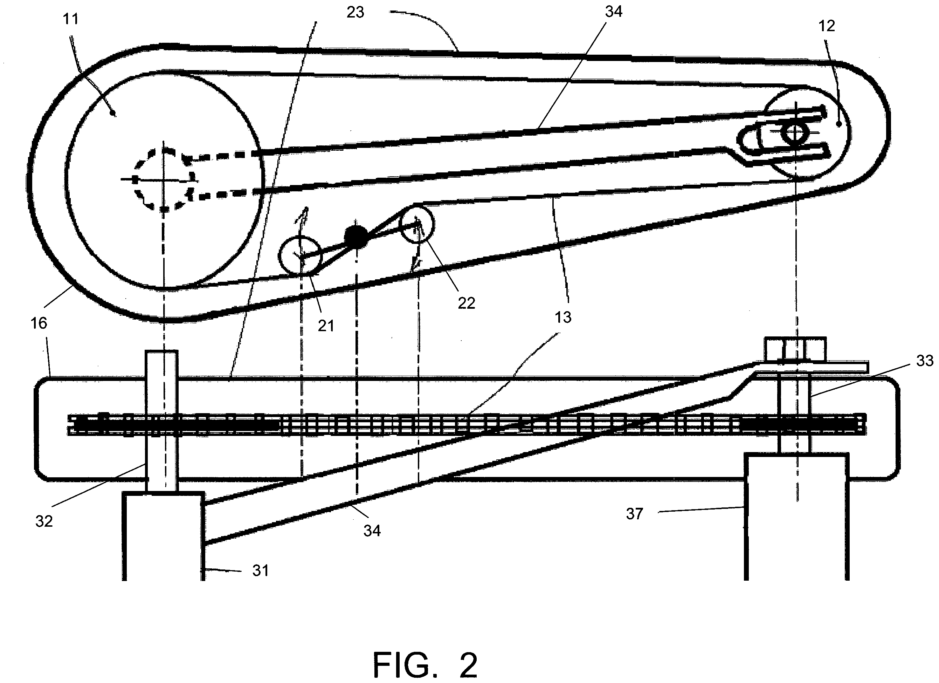

Some of the existing designs are based on pressing against the chain at two points in opposite direction. Pressing is then done by two small chain wheels 21, 22, mounted rotatably on two aligned arms of a carrier, which carrier is mounted rotatably with respect to the frame, with the point of rotation lying in the centre between the chain wheels 21, 22. Figure 2 schematically illustrates a known example, wherein the carrier is mounted in the proximity of the crank chain wheel 11; for the sake of clarity, the chain wheels 21, 22 are not shown in the correct ratio. An example of such design is shown in JP3076990U. In this known example, the point of rotation of the carrier is in one line with the points of rotation of the chain wheels 21, 22. In the Japanese example, where by the way no chain guard is present, they have created space for the chain tensioner in front of the rear wheel by placing the crank set unusually high, so that the lower horizontal frame tubes are lying fully below the chain. Further, the point of rotation of the carrier is located on the initial chain contour, so that, in the case of progress of wear, the chain is always pulled down by one of the chain wheels to below the lower tangent line of the crank axle chain wheel and the rear axle chain wheel.

As such, such design offers a larger capacity than the designs of figures 1A, 1B, 1C, but it still offers insufficient capacity because of the geometrical limitations of chain guard and chain stay. Further, the carrier is mounted rotatably to the chain guard 23, which again has the disadvantages of undesirable noise production and limited mechanical strength. Furthermore, this chain tensioner is not usable in combination with a back pedal brake, because the dead stroke of the pedals becomes too large to guarantee a reliable operation of the brake, and because the forces exerted by the chain on the tensioner in the case of braking are so high that the integrity of the chain guard is in danger.

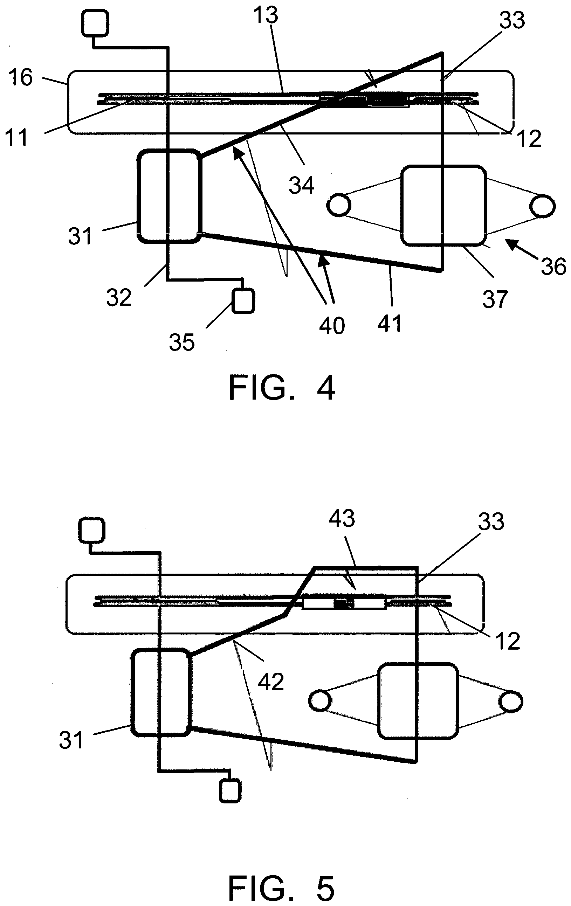

Figure 2 not only gives a side view but also a schematic top view of the bicycle chain. In the top view, some parts of the frame 14 are shown. The figure shows the bottom bracket 31 in which the crank axle 32 rotates. 33 indicates the rear axle. The rear fork comprises two frame tubes extending rearwards from the bottom bracket 31, at opposite sides of the rear wheel 36 (figure 4), and of which the respective ends carry the ends of the rear axle 33. The frame tube located at the side of the chain 13, which usually is the right hand side, is indicated as "chain stay" and can be seen at reference numeral 34. In the top view of figure 2 is visible that the chain stay 34, at least in good approximation, is located in the substantially horizontal plane defined by the crank axle and the rear axle, and crosses the vertical plane of the chain 13. After all, the chain wheel 12 of the rear wheel is located at the inner side of the chain stay 34 while the chain wheel 11 of the pedals is located at the outer side of the chain stay 34. In this context, "inner side" and "outer side" mean: in horizontal direction closer by or further removed from the vertical mid plane of the bicycle. The cross point of the chain stay 34 with the plane of the chain 13 is located closer to the rear axle 33 than to the crank axle 32. Furthermore, the diameter of the chain wheel 12 of the rear wheel is smaller than the diameter of the chain wheel 11 of the pedals. This all means that, within the envelope of the chain 13 in the rear part, there is relatively little space close to the chain wheel 12 of the rear wheel 36 for placing the rotating chain tensioner, and this is the reason that in the prior art this rotating chain tensioner is placed in the front part of the envelope of the chain 13. At that position, the vertical distance between the upper half of the chain and the lower half of the chain is relatively large, and the horizontal distance between the chain wheel 11 of the pedals and the cross point with the chain stay 34 is relatively large. A problem is, however, that the capacity of the chain tensioner is still limited, while a slender, tight fitting chain guard is desirable. When the chain 13 is strained, the chain tensioner will turn to the left in figure 2. The accommodation capacity of the chain tensioner is determined by the maximum angular rotation of the chain tensioner. In the neutral condition, said arms are directed approximately horizontally. If the chain tensioner is placed relatively low, in the case of a rotation to the left the left hand wheel 21 will move downwards and press the chain outward, causing the chain to touch the lower side of the chain guard. This can be solved by making the chain guard larger at the lower side, but it is desirable to be able to use standard chain guards. On the other hand, if the chain tensioner is placed higher, the maximum angular rotation of the chain tensioner is reduced because the right hand part of the chain, lifted by the right hand wheel 22, will touch the chain stay 34. The closest prior art document NL 1 031 405 C1 discloses a bicycle according to the preamble of claim 1.

### SUMMARY OF THE INVENTION

A general purpose of the invention is to eliminate or at least drastically reduce the said disadvantages. Particularly, the present invention aims to provide a chain tensioner that has a large length capacity, that is to say a large capacity for accommodating strain of the chain. Further, the present invention aims to provide a chain tensioner that produces little noise.

More particularly, the present invention aims to provide a chain tensioner which has a length capacity (the chain length that can be stored) so large that the strain that is to be expected during the entire lifecycle of the chain can be accommodated. More particularly, the present invention aims to also be able to accommodate the excess length which emerges on changing the chain wheel combination. If the chain tensioner is capable of accommodating all length variations possibly to be expected, it is no longer necessary to manually tension the chain by moving the rear wheel rearwards. Then, the rear wheel can be mounted in a fixed position, and it is not necessary to provide the bicycle frame with means to facilitate a horizontal adjustment of the rear wheel. This offers several advantages in the bicycle design: the position of the rear brake, the rear mudguard and the chain guard are fixed and in the design of these parts it is not necessary to take into account the adjustment of the rear wheel. Further, the advantage is obtained that, if it has been necessary to disengage the wheel for whatever reason, for instance for repairing the gear mechanism or for replacing the rear tire, the wheel can be placed back simply, quickly and correctly with the correct alignment. Further, the advantage is obtained that a bicycle designer can freely choose from arbitrary chain wheel combinations, without having to take account of the corresponding centre to centre distance between the rear axle and the crank axle. Further, the advantage is obtained of a constant low force in the chain, so that a possible large eccentricity of the crank chain wheel and/or the rear chain wheel no longer is a hindrance for applying a force sensor in the drive line, and the production price of the bicycle can be lowered by using cheaper components.

The mounting pitch of a bicycle chain, corresponding to two successive links, is 25.4 mm. If variation in the geometry of the bicycle design (centre to centre distance of the axles, choice of the chain wheel diameters) lead to a variation in the chain length of more than 25.4 mm, this can be compensated by adding or removing two (or multiples thereof) links from the chain, but smaller length variations must be accommodated in the chain tensioner. Therefore, for accommodating design variations alone, the chain tensioner must already have a capacity of at least 25.4 mm. The chain strain comes above that. The typically allowable strain of a chain for use in chain guards is about 2%; in the case of a typical chain length of about 1300 mm this translates to a normally acceptable chain strain of 26 mm. However, in practice bicycles are used long without adequate maintenance and the wear can increase up to more than 4%, in other words more than 52 mm. Therefore, the present invention aims to provide a chain tensioner having a capacity of at least 80 mm. In such case, the advantage is obtained that it is prevented in all cases that the chain comes to hang loose and runs off of the chain wheels, which would make further cycling impossible. Further, in that case the advantage is obtained that a bicycle with such chain tensioner would be considered to be a very reliable bicycle which, despite high age and thus large wear of the chain, nevertheless keeps on riding reliably.

In a further elaboration, the present invention aims to provide a chain tensioner that is suitable for application in combination with a back pedal brake.

### BRIEF DESCRIPTION OF THE DRAWINGS

These and other aspects, features and advantages of the present invention will be further clarified by the following description of one or more exemplary embodiments with reference to the drawings, in which same reference numerals indicate same or similar components, in which indications "under/above", "higher/lower", "left/right" etc. exclusively relate to the orientation shown in the figures, and in which:
figures 1A-C schematically illustrate some known designs of a chain tensioner;
figure 2 schematically illustrates another known design of a chain tensioner;
figure 3 schematically shows some components of a bicycle in side view;
figure 4 schematically shows a top view of a bicycle;
figure 5 schematically shows a top view of bicycle according to the present invention;
figure 6 is a view of an exemplary embodiment of a chain tensioner according to the present invention;
figures 7A and 7B are side views of a chain tensioner according to the present invention in two different conditions;
figure 8 is a perspective view of the rear segment of a chain stay;
figure 9 is a perspective view of a chain tensioner according to the present invention; figures 10A and 10B show schematic cross-sections of a guide wheel with confinement flanges;
figure 11 is a schematic side view comparable to the view of figure 7B, showing a blocking mechanism.

### DETAILED DESCRIPTION OF THE INVENTION

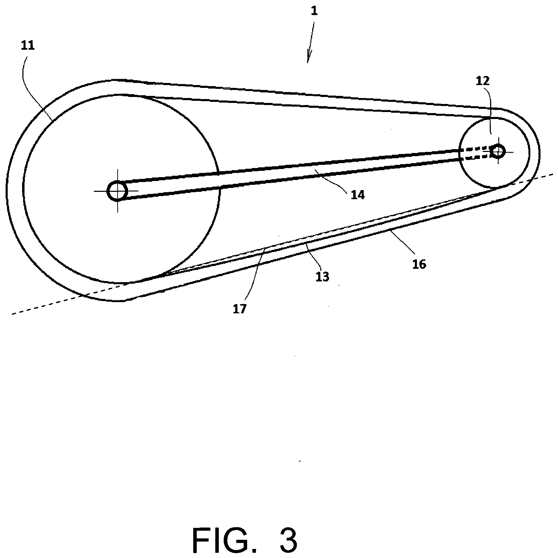

Figure 3 schematically shows some components of a bicycle 1 in side view.

Particularly, figure 3 shows, in comparable manner as figure 1A-1C, a first chain wheel 11 mounted to a crank axle, a second chain wheel 12 mounted to a rear wheel, a chain 13, a lying frame part 14 directed from rear axle to crank axle and substantially located in the plane defined by the rear axle and the crank axle, and a chain guard 16.

If the chain 13 would be completely tight, such as in the drawing, the chain would be directed according to two tangent lines to the both chain wheels 11, 12. This shape of the chain will be indicated as tight chain contour. The space enveloped by the chain contour will be indicated as chain plane. It is shown that the contour of the chain guard 16 only has a slight play with respect to the tight chain contour. In the context of the present invention, especially the lower tangent line 17 to the both chain wheels 11, 12 is of importance. In practice it is of course not possible that the lower part of the chain will be so tight that chain follows the lower tangent line 17. Even a well tensioned chain, in the new condition, always has a curved shape with the convex side directed downwards. The maximum vertical distance between the chain and the lower tangent line 17, which occurs approximately in the centre of the chain, will be indicated as "sagging". This is of course tolerated. As the chain wears and thus strains, the sagging - without chain tensioner - will become large, and the chain can quickly come into contact with the chain guard. The sagging which the chain has in its new condition will be indicated as initial sagging, and the contour which the lower chain half has in this situation will be indicated as initial lower chain contour. The initial sagging is normally in the range of 1-2 cm. In order to take this initial sagging and the occurring strain into account, the lower edge of the chain guard will in the prior art be at least 3 cm lower than the tangent line to the chain wheels. In the case of a bicycle according to the present invention, this space will not have to be larger than 1 cm.

Figure 4 schematically shows a top view of a cross-section of a bicycle with a horizontal cutting plane. The figure shows the bottom bracket 31, the crank axle 32 and the pedals 35 with the first chain wheel 11. The figure shows the rear wheel 36 with the rear hub 37, the rear axle 33 and the second chain wheel 12. The figure shows the chain 13 and the chain guard 16. And the figure shows the lying rear fork 40, which is substantially located in the plane defined by the crank axle 32 and the rear axle 33. It is noted that, for sake of clarity, the length and width are not shown in the correct ratio.

The lying rear fork 40 comprises two substantially horizontal, elongate and typically tube-shaped rear fork legs 34, 41 at opposite sides of a central bicycle plane and at opposite sides of the rear wheel 36, which rear fork legs at their front ends are fixed to the bottom bracket 31 and which rear fork legs at their rear ends carry the ends of the rear axle 33. As is usual in the prior art, these rear fork legs are shown as straight lines. The second chain wheel 12 is located at the right hand side of the rear hub 37, between the rear hub 37 and the right hand rear fork leg 34. This means particularly for the right hand rear fork leg 34 that it is directed oblique in horizontal direction, and crosses the chain plane at a relatively short distance in front of the second chain wheel 12.

Figure 5 schematically shows a same view as figure 4, but now from a bicycle adapted according to an aspect of the present invention. The essential difference with respect to the standard frame of figure 4 is that the right hand rear fork leg 34, in other words the chain stay, does not run anymore in a straight line from the bottom bracket 31 to the right hand end of the rear axle 33, but is a bent fork leg which comprises at least two segments 42, 43 making an angle with each other. More particularly, the right hand rear fork leg 34 comprises a front leg segment 42 attached to the bottom bracket 31 and a rear leg segment 43 comprising the mounting point for the rear axle 33, wherein that rear leg segment 43 is substantially parallel to the longitudinal direction of the bicycle and is directed substantially parallel to the chain plane. The bent chain stay 34 can be made from one whole, but it is also possible that the chain stay 34 is built from two or more segments welded together. In that case, the cross-point S of the chain stay 34 with the chain plane is moved forward by this design with respect to the classical situation of figure 4. Thus, space has been created behind this cross-point S for placing the chain tensioner according to the present invention.

According to a further aspect of the present invention, the chain tensioner is attached to the rear leg segment 43 of the right hand rear fork leg 34. Thus, no reaction forces are exerted on the chain guard 16, and the chain guard 16 does not operate as a sound box.

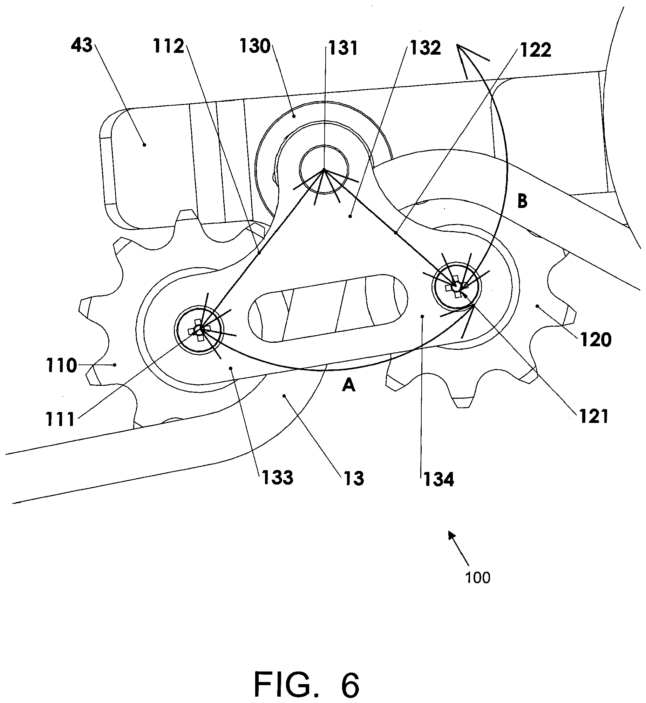

Figure 6 is a view of an exemplary embodiment of the chain tensioner 100 according to the present invention.

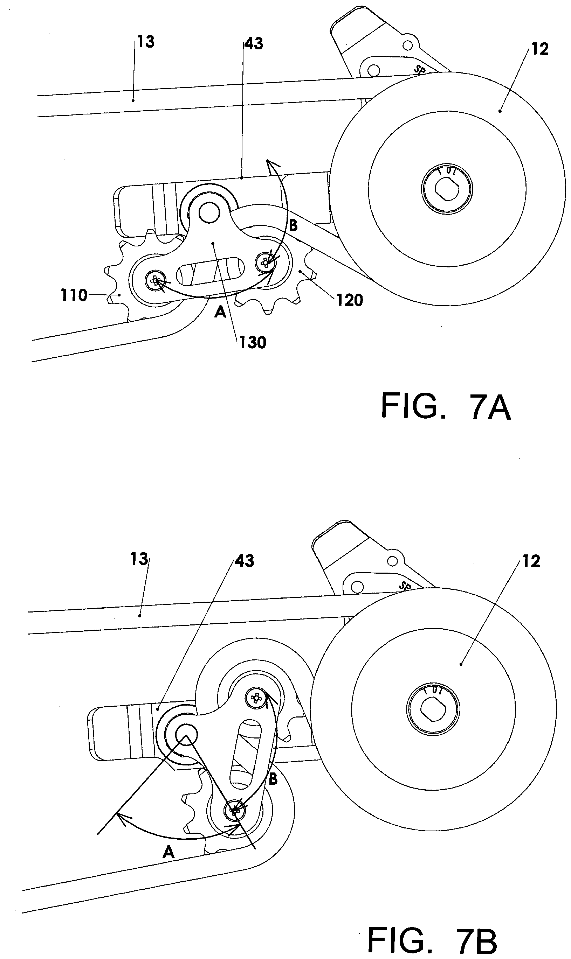

The figures 7A and 7B are views of the chain tensioner 100 in two different conditions. The chain tensioner 100 comprises two toothed guide wheels 110, 120, mounted rotatably on a carrier 130. The carrier can consist of a single plate part on which one end of the wheel axles are attached, or of two plate parts at opposite sides of the tooth wheels, so that the wheel axles are supported at both ends. The rotation axes of the tooth wheels 110, 120, directed perpendicular to the plane of drawing, are indicated by reference numerals 111, 121. The carrier 130 in turn is mounted rotatably to the rear leg segment 43 of the chain stay 34. The rotation axis of the carrier 130, also directed perpendicular to the plane of drawing, is indicated by reference numeral 131. As shown in the drawing, this rotation axis 131 crosses the plane defined by the chain close to a point behind the said cross-point S. In the embodiment shown, the rotation axes 111, 121, 131 are arranged in a triangular configuration and the carrier 130 has the shape of a triangle or an inverted T, wherein the carrier 130 is mounted to the chain stay 34 at the upper end of a body 132 of the carrier, and wherein the tooth wheels 110, 120 are mounted at ends of respective cross beams 133, 134 of the carrier. The cross beams 133, 134 are directed away from each other and are mounted at the lower end of the body 132, so that the rotation axis 131 of the carrier 130, in the situation shown in figure 7A, is located at a higher level than the rotation axes 111, 121 of the tooth wheels 110, 120. This situation is a first extreme position, occurring in the case of a new chain. It can be seen that the rotation axes 111, 121 of the tooth wheel 110, 120 are located at approximately the same level, lower than the chain stay 34 and above the said lower tangent line 17. The tooth wheel 120 which in this situation is closest to the chain wheel 12 of the rear wheel will be indicated as "rear tooth wheel", while the other tooth wheel 110 will be indicated as "front tooth wheel".

The connection line from the rotation axis 131 of the carrier 130 to the rotation axis 111 of the front tooth wheel 110, perpendicular to these axes, is indicated as front arm 112. The connection line from the rotation axis 131 of the carrier 130 to the rotation axis 121 of the rear tooth wheel 120, perpendicular to these axes, is indicated as rear arm 122. These arms make an angle with each other in the range of 80° - 100° and preferably about 90°. The chain tensioner 100 may be symmetrical, but this is not essential. In the embodiment shown, the front arm 112 is longer than the rear arm 122.

The chain 13 runs under the front tooth wheel 110 and over the rear tooth wheel 120. In an embodiment, it would be possible that the carrier 130 in its first extreme position is rotated further to the right, in which case the rear tooth wheel 120 is then displaced to the front and the front tooth wheel 110 is displaced upwards; the chain would then be tensioned more. In order to prevent that the front tooth wheel 110 would then be able to touch the chain stay 34, the rear leg segment 43 of the chain stay 34 must then extend relatively far to the front, so that the heel of the right hand foot of the user when cycling might be able to come in contact with that rear leg segment 43. In order to avoid this, the rear leg segment 43 of the chain stay 34 is not longer than necessary, and the rotation point 131 (attachment point) of the carrier 130 is located at the front end of that rear leg segment 43. A stop (not shown for sake of simplicity) prevents the carrier 130 from rotating further to the right.

The carrier 130 is provided with a bias member (not shown in this figure for sake of simplicity), for instance a torsion spring, exerting on the carrier 130 a torque with respect to the chain stay 34 (counter-clockwise in the figure). This causes the lower part of the chain to be held tight. As the chain has more play, in other words with more wear of the chain, the carrier 130 rotates further counter-clockwise before being stopped by the chain. With that movement, the front tooth wheel 110 is displaced to the rear and downwards, and subsequently on further rotation the front tooth wheel 110 is displaced upwards again; the position of the rotation point 131 of the carrier 130, in relation to the length of the front arm 112, is chosen such that, in the lowest position of the front tooth wheel 110, or better said when the front arm 112 is approximately perpendicular to the said lower tangent line 17, the chain under the front tooth wheel 110 is not displaced downwards further than up to the initial lower chain contour, or at the most just slightly beyond that initial lower chain contour, in order to prevent the chain from being able to touch the chain guard 16. In this lowest position, the lowest point of the chain preferably lies at the most 1 cm below the lowest tangent line to the chain wheels. In this rotation to the left, the rear tooth wheel 120 is displaced to the front and upwards; the position of the rotation point 131 of the carrier 130, in relation to the length of the rear arm 122, is chosen such that, when the rotation axis 121 of the rear tooth wheel 120 is located in the plane defined by the rotation axis 131 of the carrier 130 and the rotation axis 133 of the rear wheel, the rear tooth wheel 120 still runs free from the chain wheel 12 of the rear wheel.

With progression of the wear, the carrier 130 will want to rotate always further counter-clockwise, and eventually the chain part running around the front tooth wheel 110 would be pressed against the chain part between the rear tooth wheel 120 and the chain wheel 12 of the rear wheel. Depending on the precise dimensioning, the chain part running around the rear tooth wheel 120 could already touch the upper horizontal part of the chain 13. Both touches are obviously undesirable, and therefore the chain tensioner 100 is provided with a second stop, also not shown for sake of simplicity, which blocks further counter-clockwise rotation of the carrier before said touches occur. Thus, this second stop defines a second extreme rotation position of the carrier 130, illustrated in figure 7B. It is noted that, in this second extreme rotation position, the rotation axis 121 of the rear tooth wheel 120 is located at a higher level then the chain stay 34, or in any case above the plane defined by the rotation axis 131 of the carrier 130 and the rotation axis 33 of the rear wheel. However, it will not be possible for the chain to touch the part of the chain stay 34 crossing the chain plane because the front tooth wheel 110, located between the rotation point 131 of the carrier and the part of the chain stay 34 crossing the chain plane, will never pass the plane defined by the rotation axis 131 of the carrier 130 and the rotation axis 33 of the rear wheel. The angle between both extreme positions, in conjunction with the diameter of the front and rear tooth wheels 110, 120, determines the accommodation capacity of the chain tensioner 100.

It will be clear from the above that the dimensioning and positioning of the chain tensioner 100 is important. An important parameter in this respect is the diameter of the tooth wheels 110, 120, which corresponds to the number of teeth. This number may for instance be equal to nine, but in a preferred embodiment the number of teeth is equal to 10. The pitch circle then has a diameter of about 40.4 mm, and the radius of the outer tangent circle is about 25 mm. A suitable size for the length of the front arm 112 is about 37 mm, and a suitable size for the length of the rear arm 122 is about 32 mm. The rotation axis 131 of the carrier 130 is preferably located in the plane defined by the rotation axis 33 of the rear wheel and the rotation axis 32 of the pedals 35. The distance measured in this plane between the rotation axis 131 of the carrier 130 and the rotation axis 33 of the rear wheel is in the range of 50 - 150 mm; in the case of the prototype from the example this distance was 100 mm. However, some distance between the rotation axis 131 of the carrier 130 and the plane defined by the rotation axis 33 of the rear wheel and the rotation axis 32 of the pedals 35 is allowed.

It is also possible that the front arm 112 gets a smaller length, although this has the consequence that the accommodation capacity reduces. It is even possible that the length is zero, in other words that the rotation axis 131 of the carrier 130 coincides with the rotation axis 111 of the front arm 112. In that case, this rotation axis 131/111 will preferably be located below the plane defined by the rotation axis 33 of the rear wheel and the rotation axis 32 of the pedals 35, at a position where the part of the chain running under the front tooth wheel 110 coincides with the said initial lower chain contour, or higher. An advantage of such configuration may be that removing the rear wheel may be easier.

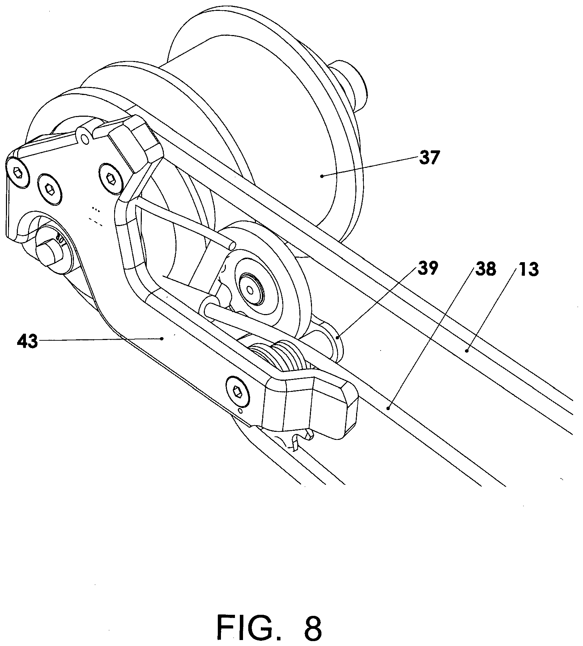

Figure 8 is a perspective view of the rear segment 43 of the chain stay 34, seen from the above and from the right. In this embodiment, this segment comprises a chain force sensor which may be utilised for controlling an electromotor of an electrically supported bicycle, or to measure the pedalling power of the cyclist in order to show this on a display. In the figure, the carrier 130 has almost reached its second extreme position, and the second tooth wheel 120 is located at a relatively high level. It can be seen that there is some horizontal distance between this rear segment 43 and the chain plane, and thus horizontal distance between said rear segment 43 and the tooth wheels 110, 120. This horizontal distance offers space for a control cable 38 for a gear mechanism accommodated in the hub 37 of the rear wheel. This control cable 38 extends adjacent the chain 13, in about horizontal direction, via said space to a control lever of the gear mechanism, not visible in this figure. A cable stop is mounted at the gear mechanism, to which the control lever is attached. The rear segment 43 is provided with a guide 39 for the control cable 38.

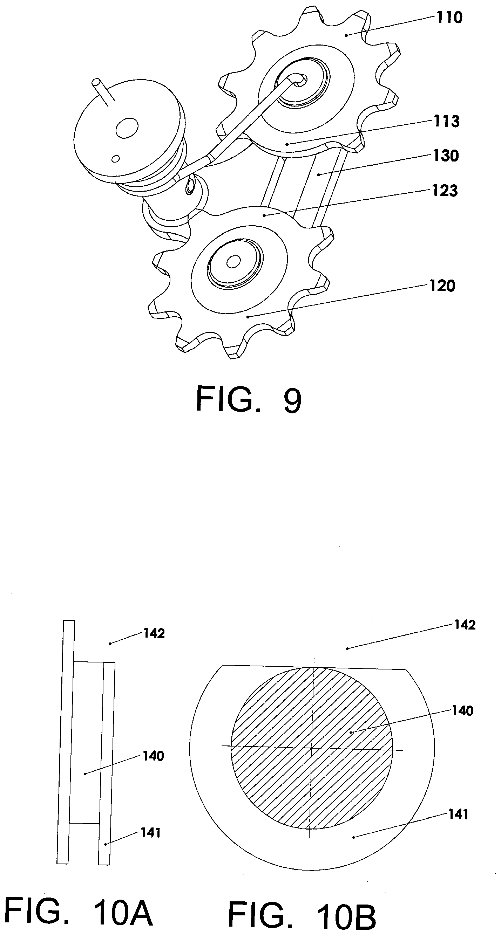

For a use of the available space as efficiently as possible, it is desirable that the tooth wheels 110, 120 are placed as close together as possible. So close, that the teeth of these tooth wheels 110, 120 almost touch each other; the minimum distance is equal to the pitch circle diameter of the two guide wheels. It is then difficult to arrange the chain 13 in the chain tensioner 100 or to remove it there from. A possibility then is to open the chain. Figure 9 is a perspective view of the chain tensioner, showing a design detail according to the present invention, which makes it possible to introduce the chain without the necessity of opening the chain. According to the invention, always two adjacent teeth 113, 123 of each tooth wheel 110, 120 are lowered, over such distance that, when the tooth wheels 110, 120 are manually rotated such that the lowered teeth are directed towards each other, the mutual distance between the lowered teeth is just large enough to allow the chain to pass.

In the example shown, the said teeth have been removed completely, in other words lowered over 100%, but depending on the height of the teeth in relation to the chain height this is not necessary.

It is otherwise noted that the chain tensioner 100 instead of toothed guide wheels 110, 120 may also have non-toothed guide wheels. The teeth serve to prevent the chain from getting loose from the guide wheels, but that can also be achieved by using confinement flanges as side guidance at opposite sides of a guide wheel, as schematically shown in the cross section of figure 10A. Figure 10B is a schematic cross section of such wheel 140, showing that it is then also possible, by taking away a segment-shaped part 142 of a confinement flange 141, to introduce the chain from the side, in comparable manner as described for the tooth wheels with reference to figure 9.

In the above, the use of the chain has been described under normal driving conditions, i.e. the cyclist pedals forward in order to bring or keep the bicycle in motion. In that case, a large tension occurs in the upper part of the chain 13, and the lower part of the chain, in the case of absence of a chain tensioner, is virtually without tension. However, this does not apply in the case of using a back pedal brake: in that case, the cyclist pedals backwards in order to actuate the brake, and in that case the tension is just present in the lower part of the chain while the upper part of the chain is virtually without tension. If the chain is too long, for instance caused by the strain occurred, the superfluous length must first be transferred from the lower chain part to the upper chain part, which means that the cyclist must first rotate the pedals backwards over a certain angular distance (dead stroke) before he is able to exert braking power. When the superfluous length is relatively small (as in the case of a new chain), this dead stroke is relatively small. However, as already said, the chain tensioner according to the present invention makes it possible to accommodate relatively much superfluous chain length (strain), but a consequence may then be that the dead stroke becomes relatively large. This may be undesirable, because it can disadvantageously influence the reaction speed of the cyclist, and because it may mean that the pedals come to stand in an unsuitable position for exerting adequate braking power. In a further elaboration of the present invention, this disadvantage is overcome by providing the chain tensioner 100 with a reset blocking mechanism 200.

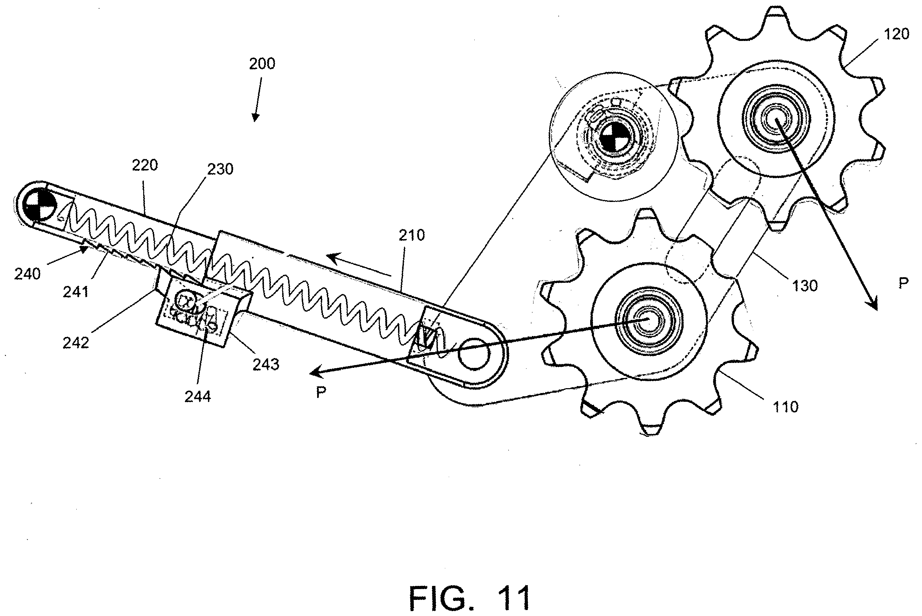

Figure 11 is a schematic side view comparable to the view of figure 7B, wherein only the chain tensioner 100 and the blocking mechanism 200 are shown and the chain, the frame and the rear wheel are left away for sake of overview. The carrier 130 has almost reached its second extreme position, and the rotation axis 121 of the rear tooth wheel 120 is located higher than the rotation axis 131 of the carrier 130. It is noted that in this figure the tooth wheels 110 and 120 each have two lowered teeth, wherein the reduction of height is less than 100%.

Arrows P indicate the braking forces working on the tooth wheels 110 and 120 when the cyclist turns the pedals backwards to actuate the back pedal brake. As a consequence of these braking forces, the carrier 130 would want to rotate clockwise, back to its first extreme position (see figure 7B). This is prevented by the blocking mechanism 200.

The blocking mechanism 200 is a one way blocking, which permits rotation of the carrier from its first extreme position to its second extreme position, in order to be able to accommodate the occurring strain, but which blocks rotation of the carrier from its second extreme position to its first extreme position. In the embodiment shown, the blocking mechanism 200 comprises two spring legs 210, 220 shifting telescopically along or within each other. The free end of the one spring leg 210 is hinged to the carrier 130, and the free end of the second spring leg 220 is hinged to the chain stay 34 (or to another part of the frame).

On the second spring leg 220, a ratchet track 240 is formed with saw tooth shaped projections 241, and on the first spring leg 210 a ratchet notch 242 is arranged, which under influence of a spring engages the saw tooth shaped projections 241. When the carrier 130 rotates counter-clockwise, the blocking mechanism 200 allows this: the two spring legs 210, 220 move out of each other, and the ratchet notch 242 passes along the saw tooth shaped projections 241. When the carrier 130 rotates clockwise, the blocking mechanism 200 allows this only over a small distance: the two spring legs 210, 220 move into each other until the ratchet notch 242 engages the first following saw tooth shaped projection 241. Then the blocking mechanism 200 blocks, and the cyclist can exert the braking force. The dead stroke of the pedals is only over a small angle, which in the worst case correspondents to the pitch of the saw tooth shaped projections 241.

As already mentioned before, the chain tensioner 100 is provided with a bias member which exerts a counter-clockwise torque on the carrier 130 with respect to the chain stay 34. This bias member thus assures that the chain tensioner 100 keeps the expanding chain taut. This bias member may for instance comprise a torsion spring, mounted at the rotation point of the carrier 130. The bias member may also be implemented as a spring 230 engaging the spring legs 210, 220, for instance a helix-shaped screw spring, which presses the two spring legs 210, 220 away from each other.

It is possible that the chain wheel 11 mounted on the bottom bracket axle, or the chain wheel 12 mounted on the rear wheel, or both, have a small amount of eccentricity. This will lead to some variation in the length of the lower chain half, and thus some variation in the chain tensioner 110. Because of the one way operation of the blocking mechanism 200 it is then possible that the carrier 130 makes a rotation counter-clockwise over a small angle, that the ratchet notch 242 then engages a next saw tooth shaped projection 241, and that the way back -clockwise rotation- is blocked. This will lead to undesirable high chain forces.

In order to prevent this, the blocking mechanism 200 is preferably, and as shown, provided with a spring-loaded play. The ratchet notch 242 is accommodated with play in a container 243 attached to the first spring leg 210, so that the ratchet notch with respect to the first spring leg 210 has a freedom of movement in a direction parallel to the mutual displacement direction of the two spring legs 210, 220. The size of this freedom of movement is chosen in relationship to the eccentricity to be expected, and is typically in the order of a few millimetres. A ratchet bias spring 244 presses the ratchet notch 242 against a saw tooth shaped projection 241.

In the case of braking, a large force is exerted on the chain. During build up of the braking force, the two spring legs 210, 220 are pushed into each other, until the ratchet notch 242 engages a saw tooth shaped projection 241. Subsequently, the ratchet notch 242 is pressed backwards into its container 243 by the saw tooth shaped projection 241, with the ratchet bias spring 244 being compressed, until the ratchet notch 242 reaches a stop and the play with the ratchet notch 242 has been eliminated. Now the blocking mechanism 200 blocks, and the braking power can be fully developed. Oppositely, in the case of relaxing the braking force, the ratchet notch 242 is pressed forward by the ratchet bias spring 244 towards the most relaxed position of the ratchet bias spring 242.

The ratchet bias spring 242 preferably has a larger bias force than the bias member 230.

Thus, the present invention provides a bicycle with chain drive provided with a chain tensioner engaging a lower chain part, for keeping the lowest chain part tensioned. The chain tensioner comprises a carrier, as well as two guide wheels mounted rotatably to the carrier. The rotation axes of the carrier and the guide wheels are substantially perpendicular to a chain plane defined by the chain. The lower chain part, coming from the pedals, engages the lower side of a front one of said guide wheels, runs over the top side of the rear one of said guide wheels, and then engages the lower side of the chain wheel of the rear wheel. The carrier is provided with bias means that exert a bias force on the carrier to move the rear one of said guide wheels up. The chain tensioner is mounted in the space between the rear chain wheel and the lying rear fork. With a prototype of this chain tensioner, a maximum capacity of 150 mm has been achieved within a typical standard chain guard.

It will be clear to a person skilled in the art that the invention is not limited to the exemplary embodiment discussed in the above, but that several variations and modifications are possible within the protective scope of the invention as defined in the attached claims. For instance, the rear fork is embodied single sidedly. Further, two or more functions may be fulfilled by a single entity. Even if certain features are mentioned in different dependent claims, the present invention also relates to an embodiment having these features together. Features which have not been explicitly described as been essential may also be omitted. Possible reference numerals used in a claim should not be construed as limiting the scope of that claim.

## Claims

1. Bicycle (1) with chain drive, comprising:
a frame (14) comprising a bottom bracket (31) as well as a horizontal rear fork (40);
a rear wheel (36) mounted rotatably in the frame, provided with a rear chain wheel (12), which rear wheel comprises a rear axle mounted to the frame;
a crank set (35) mounted rotatably in the bottom bracket (31) of the frame, provided with a front chain wheel (11);
a chain running about the front and rear chain wheel, closed in itself and defining a chain plane, comprising an upper chain part extending between the front and rear chain wheel and a lower chain part extending between the front and rear chain wheel;
wherein the horizontal rear fork (40) comprises at least one fork leg (34) adjacent the rear wheel, of which the front end is connected to the bottom bracket (31) and of which the rear end is provided with an axle mounting part to which an end of the rear axle (33) is connected, which fork leg (34) crosses said chain plane in a cross point (S) between the front chain wheel and the rear chain wheel and between the upper chain part and the lower chain part;
a chain tensioner (100) engaging the lower chain part, for keeping the lower chain part tensioned;
wherein the chain tensioner (100) comprises a carrier (130) mounted rotatably to the frame, as well as two guide wheels (110, 120) mounted rotatably to the carrier (130), wherein the rotation axes of the carrier and of the guide wheels (110, 120) are mutually substantially parallel and are substantially perpendicular to the said chain plane;
wherein the lower chain part, coming from the front chain wheel (11), engages the lower side of a front one of said chain wheels (110), then runs over the upper side of the rear one of said guide wheels (120), and then engages the lower side of the rear chain wheel (12); and **characterised in that** the carrier (130) is provided with bias means exerting a bias force on the carrier (130) for moving the rear one of said guide wheels (120) up;
and wherein the chain tensioner (100) is mounted in the space between the rear chain wheel (12) and the said cross point (S);
wherein the plane defined by the rotation axis (131) of the carrier (130) and the rotation axis (111) of the front guide wheel (110) and the plane defined by the rotation axis (131) of the carrier (130) and the rotation axis (121) of the rear guide wheel (120) make an angle with each other in the range of 80° - 100° and preferably an angle of about 90°;
wherein the mutual distance between the rotation axis (131) of the carrier (130) and the rotation axis (111) of the front guide wheel (110) is such that, in the lowest rotation position of the front guide wheel (110), the lowest point of the chain is located higher than or at the most at equal level with the initial lower chain contour.

2. Bicycle according to claim 1, wherein the mutual distance between the rotation axis (131) of the carrier (130) and the rotation axis (111) of the front guide wheel (110) is located in the range of 0-40 mm, and wherein the mutual distance between the rotation axis (131) of the carrier (130) and the rotation axis (121) of the rear guide wheel (120) is located in the range of 30-40 mm.

3. Bicycle according to claim 1 or 2, wherein the distance between the rotation axis (131) of the carrier (130) and the rotation axis (33) of the rear wheel is located in the range of 50-150 mm.

4. Bicycle according to any of the previous claims, wherein the rotation axis (131) of the carrier (130) is located in the plane defined by the rotation axis (33) of the rear wheel and the rotation axis (32) of the pedals (35).

5. Bicycle according to any of the previous claims, wherein the carrier (130) is capable of rotating between a first extreme rotation position in which the rotation axis (121) of the rear one of said guide wheels (110) is located below the plane defined by the rotation axis (33) of the rear wheel and the rotation axis (32) of the pedals (35), and a second extreme rotation position in which the rotation axis (121) of the rear one of said guide wheels (110) is located above said plane.

6. Bicycle according to any of the previous claims, wherein the bicycle is provided with a chain guard (16) enclosing the chain (13), and wherein the chain (13) remains free from the chain guard (16) in all positions of the carrier (130).

7. Bicycle according to claim 5 or 6, wherein in each position of the carrier (130) between said first and second extreme rotation positions, the lower side of the chain is located higher than or at the most at equal level with the initial lower chain contour of a new chain.

8. Bicycle according to any of the previous claims, wherein the said fork leg (34) has a rear leg segment (43) which is directed substantially parallel to the chain plane defined by the chain, wherein the carrier (130) is mounted to this rear leg segment; and wherein preferably the carrier (130) is located at some distance from the said rear leg segment, with the guide wheels (110, 120) located at the side of the carrier (130) directed to the rear leg segment.

9. Bicycle according to any of the previous claims, wherein the guide wheels (110, 120) are tooth wheels and wherein in each of said tooth wheels (110, 120) at least one and preferably two neighbouring teeth (113; 123) are lowered or removed.

10. Bicycle according to any of the previous claims, wherein each of the guide wheels (140) is provided with confinement flanges (141) at opposite sides, and wherein in each of said guide wheels always a segment-shaped part (142) of a confinement flange is removed.

11. Bicycle according to any of the previous claims, wherein the chain tensioner (100) is provided with a one way blocking (200) that blocks rotation of the carrier (130) in a direction against the said bias force.

12. Bicycle according to claim 11, wherein the one way blocking (200) is placed near the rotation axis (131) of the carrier (130).

13. Bicycle according to claim 11, wherein the one way blocking (200) comprises two spring legs (210, 220) coupled between the carrier (130) and the frame and telescopically cooperating with each other;
and wherein preferably the one way blocking (200) is provided with spring means (230) that also fully or partly fulfil the function of the said bias means.

14. Bicycle according to any of the previous claims 11-13, wherein the one way blocking (200) is provided with a spring-loaded play for accommodating possible eccentricity of a chain wheel.

15. Bicycle according to any of the previous claims, wherein the bias means comprise a torsion spring and/or a pulling spring and/or a pushing spring.

## Patentansprüche

1. Fahrrad (1) mit Kettenantrieb, umfassend:
einen Rahmen (14) umfassend ein Tretlager (31) sowie eine horizontale hintere Gabel (40);
ein Hinterrad (36), das drehbar in dem Rahmen montiert ist und mit einem hinteren Kettenrad (12) versehen ist, wobei das Hinterrad eine hintere Achse umfasst, die an dem Rahmen angebracht ist;
einen Kurbelsatz (35), der drehbar in dem Tretlager (31) des Rahmens montiert ist und mit einem vorderen Kettenrad (11) versehen ist;
eine um das vordere und das hintere Kettenrad laufende Kette, die in sich geschlossen ist und eine Kettenebene definiert, umfassend einen oberen Kettenteil, der sich zwischen dem vorderen und hinteren Kettenrad erstreckt, und einen unteren Kettenteil, der sich zwischen dem vorderen und hinteren Kettenrad erstreckt;
wobei die horizontale hintere Gabel (40) wenigstens ein zu dem Hinterrad benachbartes Gabelbein (34) aufweist, von dem das vordere Ende mit dem Tretlager (31) verbunden ist und von dem das hintere Ende mit einem Achsbefestigungsteil versehen ist, mit dem ein Ende der hinteren Achse (33) verbunden ist, wobei das Gabelbein (34) die Kettenebene in einem Kreuzungspunkt (S) zwischen dem vorderen Kettenrad und dem hinteren Kettenrad und zwischen dem oberen Kettenteil und dem unteren Kettenteil kreuzt;
einen Kettenspanner (100), der mit dem unteren Kettenteil in Eingriff steht, um den unteren Kettenteil gespannt zu halten;
wobei der Kettenspanner (100) einen Träger (130), der drehbar an dem Rahmen montiert ist, sowie zwei an dem Träger (130) drehbar gelagerte Führungsräder (110, 120) aufweist, wobei die Drehachsen des Trägers und der Führungsräder (110, 120) zueinander im Wesentlichen parallel sind und im Wesentlichen senkrecht zu der Kettenebene sind;
wobei der untere Kettenteil, der von dem vorderen Kettenrad (11) kommt, in Eingriff mit der unteren Seite eines vorderen der Kettenräder (110) gelangt, dann über die obere Seite des hinteren der Führungsräder (120) läuft und dann in Eingriff mit der unteren Seite des hinteren Kettenrades (12) gelangt;
und **dadurch gekennzeichnet, dass**
der Träger (130) mit Vorspannmitteln versehen ist, die eine Vorspannkraft auf den Träger (130) ausüben, um das hintere der Führungsräder (120) nach oben zu bewegen;
und wobei der Kettenspanner (100) in dem Raum zwischen dem hinteren Kettenrad (12) und dem Kreuzungspunkt (S) montiert ist;
wobei die Ebene, die durch die Drehachse (131) des Trägers (130) und die Drehachse (111) des vorderen Führungsrades (110) definiert ist, und die Ebene, die durch die Drehachse (131) des Trägers (130) und die Drehachse (121) des hinteren Führungsrades (120) definiert ist, einen Winkel miteinander im Bereich von 80° - 100° und vorzugsweise einen Winkel von etwa 90° bilden;
wobei der gegenseitige Abstand zwischen der Drehachse (131) des Trägers (130) und der Drehachse (111) des vorderen Führungsrades (110) derart ist, dass in der niedrigsten Rotationsposition des vorderen Führungsrades (110) der niedrigste Punkt der Kette sich oberhalb der anfänglichen unteren Kettenkontur oder höchstens auf gleicher Höhe mit dieser befindet.

2. Fahrrad nach Anspruch 1, wobei der gegenseitige Abstand zwischen der Drehachse (131) des Trägers (130) und der Drehachse (111) des vorderen Führungsrades (110) im Bereich von 0-40 mm liegt und wobei der gegenseitige Abstand zwischen der Drehachse (131) des Trägers (130) und der Drehachse (121) des hinteren Führungsrades (120) im Bereich von 30-40 mm liegt.

3. Fahrrad nach Anspruch 1 oder 2, wobei der Abstand zwischen der Drehachse (131) des Trägers (130) und der Drehachse (33) des Hinterrades im Bereich von 50-150 mm liegt.

4. Fahrrad nach einem der vorhergehenden Ansprüche, wobei die Drehachse (131) des Trägers (130) sich in der Ebene befindet, die durch die Drehachse (33) des Hinterrades und die Drehachse (32) der Pedale (35) definiert ist.

5. Fahrrad nach einem der vorhergehenden Ansprüche, wobei sich der Träger (130) zwischen einer ersten extremen Drehposition, in der sich die Drehachse (121) des hinteren der Führungsräder (110) unterhalb der Ebene befindet, die durch die Drehachse (33) des Hinterrades und die Drehachse (32) der Pedale (35) definiert ist, und einer zweiten extremen Drehposition, in der die Drehachse (121) des hinteren der Führungsräder (110) oberhalb dieser Ebene liegt, drehen kann.

6. Fahrrad nach einem der vorhergehenden Ansprüche, wobei das Fahrrad mit einem Kettenschutz (16) versehen ist, der die Kette (13) umschließt, und wobei die Kette (13) in allen Positionen des Trägers (130) frei von dem Kettenschutz (16) bleibt.

7. Fahrrad nach Anspruch 5 oder 6, wobei sich in jeder Position des Trägers (130) zwischen den ersten und zweiten extremen Drehpositionen die untere Seite der Kette oberhalb oder höchstens auf gleicher Höhe mit der anfänglichen unteren Kettenkontur einer neuen Kette befindet.

8. Fahrrad nach einem der vorhergehenden Ansprüche, wobei das Gabelbein (34) ein hinteres Beinsegment (43) aufweist, das im Wesentlichen parallel zu der durch die Kette definierten Kettenebene ausgerichtet ist, wobei der Träger (130) an diesem hinteren Beinsegment montiert ist und wobei sich der Träger (130) vorzugsweise in einiger Entfernung von dem hinteren Beinsegment befindet, wobei sich die Führungsräder (110, 120) an der Seite des Trägers (130) befinden, die auf das hintere Beinsegment ausgerichtet ist.

9. Fahrrad nach einem der vorhergehenden Ansprüche, wobei die Führungsräder (110, 120) Zahnräder sind und wobei in jedem der Zahnräder (110, 120) wenigstens einer und vorzugsweise zwei benachbarte Zähne (113; 123) herabgesetzt oder entfernt sind.

10. Fahrrad nach einem der vorangehenden Ansprüche, wobei jedes der Führungsräder (140) an gegenüberliegenden Seiten mit Begrenzungsflanschen (141) versehen ist und wobei in jedem der Führungsräder immer ein segmentförmiger Teil (142) eines Begrenzungsflansches entfernt ist.

11. Fahrrad nach einem der vorhergehenden Ansprüche, wobei der Kettenspanner (100) mit einer Einwegblockierung (200) versehen ist, welche die Drehung des Trägers (130) in eine Richtung gegen die Vorspannkraft blockiert.

12. Fahrrad nach Anspruch 11, wobei die Einwegblockierung (200) nahe der Drehachse (131) des Trägers (130) angeordnet ist.

13. Fahrrad nach Anspruch 11, wobei die Einwegblockierung (200) zwei Federschenkel (210, 220) umfasst, die zwischen dem Träger (130) und dem Rahmen gekoppelt sind und teleskopisch miteinander zusammenwirken;
und wobei vorzugsweise die Einwegblockierung (200) mit Federmitteln (230) versehen ist, die auch die Funktion der Vorspannmittel ganz oder teilweise erfüllen.

14. Fahrrad nach einem der vorhergehenden Ansprüche 11 bis 13, wobei die Einwegblockierung (200) mit einem federbelasteten Spiel zum Aufnehmen einer möglichen Exzentrizität eines Kettenrads versehen ist.

15. Fahrrad nach einem der vorhergehenden Ansprüche, wobei die Vorspannmittel eine Torsionsfeder und/oder eine Zugfeder und/öder eine Druckfeder umfassen.

## Revendications

1. Bicyclette (1) avec transmission par chaîne, comprenant :
un cadre (14) comprenant un axe de pédalier (31) de même qu'un hauban (40) ;
une roue arrière (36) montée en rotation sur le cadre, pourvue d'un pignon (12) qui comprend un axe arrière monté sur le cadre ;
un pédalier (35) monté en rotation sur le boîtier de pédalier (31) du cadre, pourvu d'un plateau (11) ;
une chaîne passant par le plateau et le pignon, fermée sur elle-même et définissant un plan de chaîne, comprenant une partie de chaîne supérieure s'étendant entre le plateau et le pignon et une partie de chaîne inférieure s'étendant entre le plateau et le pignon ;
dans laquelle le hauban (40) comprend au moins une base (34) adjacente à la roue arrière, dont l'extrémité avant est raccordée au boîtier de pédalier (31) et dont l'extrémité arrière est pourvue d'une pièce de montage axiale à laquelle une extrémité de l'axe arrière (33) est raccordée, laquelle base (34) croise ledit plan de chaîne au niveau d'un point de croisement (S) entre le plateau et le pignon et entre la partie de chaîne supérieure et la partie de chaîne inférieure ;
un tendeur de chaîne (100) engageant la partie de chaîne inférieure pour maintenir la partie de chaîne inférieure tendue ;
dans laquelle le tendeur de chaîne (100) comprend un support (130) monté en rotation sur le cadre, de même que deux roues de guidage (110, 120) montées en rotation sur le support (130), dans lequel les axes de rotation du support et des roues de guidage (110, 120) sont mutuellement et substantiellement parallèles et sont substantiellement perpendiculaires audit plan de chaîne ;
dans laquelle la partie de chaîne inférieure, provenant du plateau (11), engage le côté inférieur d'une roue avant desdites roues de chaîne (110), puis passe sur le côté supérieur de la roue arrière desdites roues de guidage (120), puis engage le côté inférieur du pignon (12) ;
et **caractérisée en ce que** le support (130) est pourvu de moyens d'inclinaison exerçant une force d'inclinaison sur le support (130) pour déplacer la roue arrière desdites roues de guidage (120) vers le haut ;
et dans laquelle le tendeur de chaîne (100) est monté dans l'espace entre le pignon (12) et ledit point de croisement (S) ;
dans laquelle le plan défini par l'axe de rotation (131) du support (130) et l'axe de rotation (111) de la roue de guidage avant (110) et le plan défini par l'axe de rotation (131) du support (130) et l'axe de rotation (121) de la roue de guidage arrière (120) forment ensemble un angle dans la gamme allant de 80 à 100° et préférablement un angle d'environ 90° ;
dans laquelle la distance mutuelle entre l'axe de rotation (131) du support (130) et l'axe de rotation (111) de la roue de guidage avant (110) est telle que, à la position de rotation la plus basse de la roue de guidage avant (110) , le point le plus bas de la chaîne est situé plus haut que le contour inférieur initial de la chaîne ou au moins à niveau égal.

2. Bicyclette selon la revendication 1, dans laquelle la distance mutuelle entre l'axe de rotation (131) du support (130) et l'axe de rotation (111) de la roue de guidage avant (110) est comprise dans la gamme allant de 0 à 40 mm, et dans laquelle la distance mutuelle entre l'axe de rotation (131) du support (130) et l'axe de rotation (121) de la roue de guidage arrière (120) est comprise dans la gamme allant de 30 à 40 mm.

3. Bicyclette selon les revendications 1 ou 2, dans laquelle la distance entre l'axe de rotation (131) du support (130) et l'axe de rotation (33) de la roue arrière est comprise dans la gamme allant de 50 à 150 mm.

4. Bicyclette selon l'une quelconque des revendications précédentes, dans laquelle l'axe de rotation (131) du support (130) se trouve dans le plan défini par l'axe de rotation (33) de la roue arrière et l'axe de rotation (32) des pédales (35).

5. Bicyclette selon l'une quelconque des revendications précédentes, dans laquelle le support (130) peut pivoter entre une première position de rotation extrême dans laquelle l'axe de rotation (121) de la roue arrière desdites roues de guidage (110) se situe sous le plan défini par l'axe de rotation (33) de la roue arrière et l'axe de rotation (32) des pédales (35), et une deuxième position de rotation extrême dans laquelle l'axe de rotation (121) de la roue arrière desdites roues de guidage (110) se situe au-dessus dudit plan.

6. Bicyclette selon l'une quelconque des revendications précédentes, dans laquelle la bicyclette est pourvue d'un garde-chaîne (16) renfermant la chaîne (13), et dans laquelle la chaîne (13) est détachée du garde-chaîne (16) dans toutes les positions du support (130).

7. Bicyclette selon les revendications 5 ou 6, dans laquelle dans chaque position du support (130) entre lesdites première et deuxième positions de rotation extrêmes, le côté inférieur de la chaîne est situé plus haut que le contour inférieur initial d'une nouvelle chaîne ou au moins à niveau égal.

8. Bicyclette selon l'une quelconque des revendications précédentes, dans laquelle ladite base (34) possède un segment de base (43) qui est substantiellement orienté parallèlement au plan de chaîne défini par la chaîne, dans laquelle le support (130) est monté sur ce segment de base ; et dans laquelle préférablement le support (130) est situé à une certaine distance dudit segment de base, les roues de guidage (110, 120) étant situées sur le côté du support (130) orienté vers le segment de base.

9. Bicyclette selon l'une quelconque des revendications précédentes, dans laquelle les roues de guidage (110, 120) sont des roues dentées et dans laquelle sur chacune desdites roues dentées (110, 120) au moins une et préférablement deux dents adjacentes (113, 123) sont abaissées ou retirées.

10. Bicyclette selon l'une quelconque des revendications précédentes, dans laquelle chacune des roues de guidage (140) est pourvue de brides de confinement (141) sur des côtés opposés, et dans laquelle sur chacune desdites roues de guidage une partie en forme de segment (142) d'une bride de confinement est toujours retirée.

11. Bicyclette selon l'une quelconque des revendications précédentes, dans laquelle le tendeur de chaîne (100) est pourvu d'un blocage unilatéral (200) qui bloque la rotation du support (130) dans une direction contraire à ladite force d'inclinaison.

12. Bicyclette selon la revendication 11, dans laquelle le blocage unilatéral (200) est placé près de l'axe de rotation (131) du support (130).

13. Bicyclette selon la revendication 11, dans laquelle le blocage unilatéral (200) comprend deux jambes à ressort (210, 220) couplées entre le support (130) et le cadre et coopérant de manière télescopique entre elles ; et dans laquelle préférablement le blocage unilatéral (200) est pourvu de ressorts (230) remplissant également complètement ou partiellement la fonction desdits moyens d'inclinaison.

14. Bicyclette selon l'une quelconque des revendications précédentes 11 à 13, dans laquelle le blocage unilatéral (200) est pourvu d'un jeu élastique à ressort pour s'adapter à une possible excentricité d'une roue de chaîne.

15. Bicyclette selon l'une quelconque des revendications précédentes, dans laquelle les moyens d'inclinaison comprennent un ressort de torsion ou un ressort de traction et/ou un ressort de poussée.
